# EUROPÄISCHE PATENTSCHRIFT

(11) **EP 2 995 409 B1**
(45) Veröffentlichungstag und Bekanntmachung des Hinweises auf die Patenterteilung: **27.03.2019**
(21) Anmeldenummer: 14184545.3
(22) Anmeldetag: 12.09.2014
(51) Int. Cl.: B23H 9/06, C25F 3/14

(54) **Vorrichtung zum elektrochemischen Markieren**
Device for electrochemical marking
Dispositif de marquage électrochimique

(43) Veröffentlichungstag der Anmeldung: 16.03.2016
(73) Patentinhaber: Reuter GmbH & Co. KG, 40699 Erkrath (DE)
(72) Erfinder: Reuter, Olaf, 40699 Erkrath (DE)
(74) Vertreter: Schmid, Wolfgang

(56) Entgegenhaltungen:
- DE-A1- 4 038 584
- FR-A1- 2 856 628
- GB-A- 1 209 170
- US-A- 2 967 813

## Beschreibung

Die Erfindung betrifft eine Vorrichtung zum elektrochemischen Markieren von Oberflächen von elektrisch leitfähigen Gegenständen, mit einem Griffteil, mit einer Stromquelle und mit einer an dem Griffteil angebrachten und mit der Stromquelle verbundenen Elektrode nach der im Oberbegriff von Anspruch 1 näher definierten Art.

Eine gattungsgemäße Vorrichtung ist aus der GB 1 209 170 A bekannt.

Weitere derartige Vorrichtungen sind in der DE 24 45 686 A1, DE 76 26 947 U1, DE 40 38 717 C2 und DE 40 38 584 A1 beschrieben.

Solche Vorrichtungen zum elektrochemischen Markieren von Oberflächen von elektrisch leitfähigen Gegenständen weisen auf der Primärseite der Vorrichtung meist eine Wechselstromquelle mit einem Transformator und einer Netzstromversorgung auf, die in einem gemeinsamen oder mehreren einzelnen Gehäusen untergebracht sind. Auf der Sekundärseite der Vorrichtung wird die durch den Transformator erzeugte Wechselspannung von üblicherweise 12 Volt über elektrische Leitungen zu einem Griffteil übertragen, an dem eine beispielsweise aus Graphit bestehende Elektrode angebracht ist. An der Elektrode ist meist ein Filz befestigt, der mit einem speziellen Elektrolyten benetzt wird. Auf das zu markierende Werkstück, das mit dem anderen Kontakt des Transformators verbunden wird, wird meist eine Signierschablone gelegt und es wird anschließend mit dem Filz über die Schablone gestrichen. Dabei gelangt das Elektrolyt durch die Aussparungen in der Schablone auf das Werkstück und durch die elektrische Spannung wird eine elektrochemische Reaktion, nämlich eine Oxidation auf der Oberfläche des zu markierenden Gegenstands, ausgelöst, was zu einer Schwärzung der Oberfläche in diesem Bereich führt. Solche Markierungen haben sich bewährt, insbesondere da sie fälschungssicher und, außer durch Abtragen von Material, nicht mehr rückgängig gemacht werden können. Gleichzeitig trägt die Markierung nicht auf oder ätzt Material ab, so dass keinerlei Beschädigung des Werkstücks gegeben ist.

Mit den bekannten Vorrichtungen können diese Vorteile meist problemlos erreicht werden, der Nachteil der bekannten Vorrichtungen liegt jedoch in der meist schwierigen und aufwändigen Handhabung derselben.

Es ist daher Aufgabe der vorliegenden Erfindung, eine Vorrichtung zum elektrochemischen Markieren von Oberflächen von elektrisch leitfähigen Gegenständen zu schaffen, die eine hohe Zuverlässigkeit und eine einfache Handhabung aufweist.

Erfindungsgemäß wird diese Aufgabe durch die in Anspruch 1 genannten Merkmale gelöst.

Dabei ist die elektrische Steuereinrichtung dafür vorgesehen, die an die Elektrode anzulegende Spannung zu modulieren. Ein solches Modulieren der an der Elektrode anliegenden Spannung kann beispielsweise ein Auswählen der Frequenz und/oder der Wellenform bzw. des Rechteckimpulses umfassen, um beispielsweise den Schwärzungseffekt, der mit der erfindungsgemäßen Vorrichtung erreicht werden kann, zu steigern oder die sich bei bekannten Vorrichtungen ergebenden, unerwünschten Gasbläschen unter der Elektrode zu minimieren. Gegebenenfalls ist es auch möglich, an die Elektrode eine Gleichspannung anzulegen, so dass bedarfsweise auch das sogenannte Hellsignieren oder Ätzen durchgeführt werden kann, bei dem die Oberfläche des zu markierenden Werkstücks nicht geschwärzt, sondern Material von derselben abgetragen wird.

Wenn in einer sehr vorteilhaften Weiterbildung der Erfindung die elektrische Steuereinrichtung dafür vorgesehen ist, die an die Elektrode angelegte Spannung zu regeln, so lässt sich ein sehr einfacher Betrieb der erfindungsgemäßen Vorrichtung realisieren.

Eine Verbesserung der Betriebssicherheit der erfindungsgemäßen Vorrichtung ergibt sich, wenn die elektrische Steuereinrichtung dafür vorgesehen ist, die der Elektrode zugeführte Stromstärke zu überwachen und zu begrenzen.

Diese Betriebssicherheit der erfindungsgemäßen Vorrichtung kann dadurch erhöht werden, dass die elektrische Steuereinrichtung dafür vorgesehen ist, eine Kurzschlussüberwachung durchzuführen.

Um einen geschlossenen Stromkreis unter Einbindung des zu bearbeitenden Gegenstands zu erreichen, kann des Weiteren vorgesehen sein, dass das Griffteil eine Buchse zum Anschluss einer elektrischen Leitung zur Herstellung einer Masseverbindung mit dem Gegenstand aufweist.

Alternativ oder zusätzlich kann hierzu auch an dem Griffteil ein isolierter Rahmen angebracht sein, mit dem eine Masseverbindung zu dem Gegenstand herstellbar ist, wodurch auf noch einfachere Art und Weise eingeschlossener Stromkreis erzielt wird.

Um einen möglichst langen Betrieb der erfindungsgemäßen Vorrichtung ohne das Erfordernis zum Laden des Speicherelements erreichen zu können, kann des Weiteren vorgesehen sein, dass das wenigstens eine Speicherelement zur Speicherung elektrischer Energie ein Lithium-Ionen-Akku ist. Eine solche Ausführung des Speicherelements gewährleistet auch einen zuverlässigen Betrieb der erfindungsgemäßen Vorrichtung.

Eine sehr einfache Möglichkeit, das wenigstens eine elektrische Speicherelement im Bedarfsfall zu laden, kann darin bestehen, dass das Griffteil an seiner Außenseite wenigstens einen Kontakt zur Verbindung des wenigstens einen elektrischen Speicherelements mit einem Ladegerät aufweist.

Nachfolgend ist ein Ausführungsbeispiel der Erfindung anhand der Zeichnung prinzipmäßig dargestellt.

Es zeigt:
- Fig. 1: eine sehr schematische Darstellung einer erfindungsgemäßen Vorrichtung zum elektrochemischen Markieren eines Gegenstands; und
- Fig. 2: einen Schnitt nach der Linie II-II aus Fig. 1.

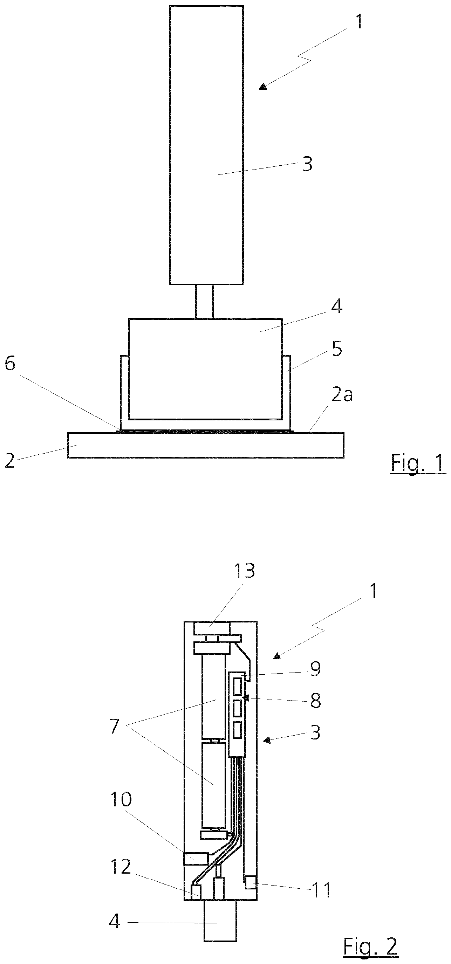

Fig. 1 zeigt eine Vorrichtung 1 zum elektrochemischen Markieren einer Oberfläche 2a eines elektrisch leitfähigen Gegenstands 2. Die Vorrichtung 1 weist ein Griffteil 3 und eine Elektrode 4 auf. Die Elektrode 4 ist in an sich bekannter Weise von einem Filz 5 umgeben. Zwischen dem an der Elektrode 4 angebrachten Filz 5 und der Oberfläche des Gegenstands 2 ist im vorliegenden Fall außerdem eine Signierschablone 6 angeordnet. Durch Anlegen einer elektrischen Spannung an die Elektrode 4 und gleichzeitiges Benetzen des Filzes 5 mit einem nicht dargestellten Elektrolyt kann auf eine grundsätzlich bekannte Art und Weise eine Oxidation der Oberfläche 2a des Gegenstands 2 erreicht werden.
In dem Schnitt durch die Vorrichtung 1 und insbesondere durch das beispielsweise aus einem geeigneten Kunststoff hergestellte Griffteil 3 derselben gemäß Fig. 2 sind zwei als Stromquelle für die Vorrichtung 1 dienende Speicherelemente 7 zur Speicherung von elektrischer Energie zu erkennen. Durch die beiden Speicherelemente 7 kann die Vorrichtung 1 unabhängig von einer Netzspannung betrieben werden. Bei den Speicherelementen 7 handelt es sich im vorliegenden Fall um Lithium-Ionen-Akkus, die in der Lage sind, eine konstante Gleichspannung zu erzeugen. Im vorliegenden Fall sind in dem Griffteil 3 zwei Speicherelemente 7 angeordnet, es wäre jedoch auch möglich, die Vorrichtung 1 mit einer geringeren oder einer größeren Anzahl an Speicherelementen 7 zu betreiben. In dem Griffteil 3 ist des Weiteren eine elektrische Steuereinrichtung 8 angeordnet, die sich auf einer Platine 9 befindet bzw. die die Platine 9 aufweist und mehrere, nachfolgend näher erläuterte Funktionen erfüllt. Zunächst ist die Steuereinrichtung 8 dafür vorgesehen, die von dem Speicherelement 7 erzeugte Gleichspannung in eine an die Elektrode 4 anzulegende Wechselspannung umzuwandeln. Des Weiteren kann mittels der elektrischen Steuereinrichtung 8 die an die Elektrode 4 angelegte Spannung geregelt und/oder moduliert werden. Es ist auch vorgesehen, dass mittels der elektrischen Steuereinrichtung 8 die Frequenz der Wechselspannung geändert werden kann, um die Art und Weise der Anbringung der Markierung auf der Oberfläche 2a des Gegenstands 2 zu beeinflussen. Eine weitere Aufgabe der elektrischen Steuereinrichtung 8 besteht im vorliegenden Fall darin, die der Elektrode 4 zugeführte Stromstärke zu überwachen und gegebenenfalls zu begrenzen. Des Weiteren wird mit der elektrischen Steuereinrichtung 8 eine Kurzschlussüberwachung sowie eine Temperaturüberwachung innerhalb des Griffteils 3 durchgeführt.

Hierfür ist die elektrische Steuereinrichtung 8 sowohl mit den Speicherelementen 7, der Elektrode 4, einem Bedienschalter 10 und einer Buchse 11 verbunden, die sich an dem Griffteil 3 befindet. Zur Herstellung dieser Verbindungen sind jeweilige, nicht näher bezeichnete elektrische Leitungen vorgesehen. Die Buchse 11 dient zum Anschluss einer elektrischen Leitung zur Herstellung einer Masseverbindung mit dem Gegenstand 2 und damit zur Erzeugung eines geschlossenen Stromkreises unter Einbindung des Gegenstands 2. Diese elektrische Leitung, die aufgrund ihrer Funktion auch als Masseleitung bezeichnet werden kann, ist in den Figuren nicht dargestellt. Alternativ oder zusätzlich zu der Buchse 11 kann auch ein an dem Griffteil 3 angebrachter isolierter Rahmen vorgesehen sein, mit dem eine Masseverbindung zu dem Gegenstand 2 herstellbar ist. Dieser in den Figuren ebenfalls nicht dargestellte Rahmen kann so ausgeführt sein, dass er während des Niederdrückens des Griffteils 3 mit der daran angebrachten Elektrode 4 auf den Gegenstand 2 ebenfalls auf den Gegenstand 2 gedrückt wird und dadurch den elektrischen Kontakt mit demselben herstellt.

Im vorliegenden Fall ist in dem Griffteil 3 außerdem ein Beleuchtungselement 12, das beispielsweise in Form einer LED ausgebildet sein kann, sowie wenigstens ein Kontakt 13 vorgesehen, der zur Verbindung des wenigstens einen elektrischen Speicherelements 7 mit einem nicht dargestellten Ladegerät dient. Das Beleuchtungselement 12 und der Kontakt 13 sind ebenfalls über entsprechende elektrische Leitungen mit der Steuereinrichtung 8 verbunden.

In dem Ladegerät, das beispielsweise als Ladeschale ausgebildet sein oder eine Ladeschale aufweisen kann, kann sich wenigstens ein Kontaktstift oder ähnliches befinden, der beispielsweise federnd gelagert sein kann und mit dem wenigstens einen Kontakt 13 an dem Griffteil 3 einen elektrischen Kontakt herstellt. Vorzugsweise sind sowohl zwei Kontakte 13 als auch zwei entsprechende Kontaktstifte an dem Ladegerät vorgesehen. Das Ladegerät kann dabei so ausgeführt sein, dass es an unterschiedliche Spannungen von beispielsweise 100 bis 250 Volt angepasst werden kann. In das Ladegerät kann ein beispielsweise in der Form einer Wanne ausgebildetes Behältnis integriert sein, das als Elektrolytspeicher für die Signierflüssigkeit dient, um den Filz 5 an der Elektrode 4 stets feucht halten zu können.

## Patentansprüche

1. Vorrichtung zum elektrochemischen Markieren von Oberflächen von elektrisch leitfähigen Gegenständen, mit einem Griffteil (3), mit einer Stromquelle (7) und mit einer an dem Griffteil (3) angebrachten und mit der Stromquelle (7) verbundenen Elektrode (4), wobei die Stromquelle (7) als wenigstens ein in dem Griffteil (3) angeordnetes Speicherelement zur Speicherung von elektrischer Energie ausgebildet ist, und dass in dem Griffteil (3) eine elektrische Steuereinrichtung (8) zur Umwandlung einer von dem wenigstens einen Speicherelement (7) erzeugten Gleichspannung in eine an die Elektrode (4) anzulegende Wechselspannung angeordnet ist,
**dadurch gekennzeichnet, dass**
die elektrische Steuereinrichtung (8) dafür vorgesehen ist, die an die Elektrode (4) anzulegende Spannung durch Ändern der Frequenz der Wechselspannung zu modulieren.

2. Vorrichtung nach Anspruch 1,
**dadurch gekennzeichnet, dass**
die elektrische Steuereinrichtung (8) dafür vorgesehen ist, die an die Elektrode (4) angelegte Spannung zu regeln.

3. Vorrichtung nach Anspruch 1 oder 2,
**dadurch gekennzeichnet, dass**
die elektrische Steuereinrichtung (8) dafür vorgesehen ist, die der Elektrode (4) zugeführte Stromstärke zu überwachen und zu begrenzen.

4. Vorrichtung nach einem der Ansprüche 1 bis 3,
**dadurch gekennzeichnet, dass**
die elektrische Steuereinrichtung (8) dafür vorgesehen ist, eine Kurzschlussüberwachung durchzuführen.

5. Vorrichtung nach einem der Ansprüche 1 bis 4,
**dadurch gekennzeichnet, dass**
das Griffteil (3) eine Buchse (11) zum Anschluss einer elektrischen Leitung zur Herstellung einer Masseverbindung mit dem Gegenstand (2) aufweist.

6. Vorrichtung nach einem der Ansprüche 1 bis 5,
**dadurch gekennzeichnet, dass**
an dem Griffteil (3) ein isolierter Rahmen angebracht ist, mit dem eine Masseverbindung zu dem Gegenstand (2) herstellbar ist.

7. Vorrichtung nach einem der Ansprüche 1 bis 6,
**dadurch gekennzeichnet, dass**
das wenigstens eine Speicherelement (7) zur Speicherung elektrischer Energie ein Lithium-Ionen-Akku ist.

8. Vorrichtung nach einem der Ansprüche 1 bis 7,
**dadurch gekennzeichnet, dass**
das Griffteil (3) an seiner Außenseite wenigstens einen Kontakt (13) zur Verbindung des wenigstens einen elektrischen Speicherelements (7) mit einem Ladegerät aufweist.

## Claims

1. Apparatus for electrochemical marking of surfaces of electrically conductive objects, having a handle part (3), having a current source (7) and having an electrode (4), which is fitted to the handle part (3) and connected to the current source (7), wherein the current source (7) is designed as at least one storage element for storing electrical energy arranged in the handle part (3), and in that an electrical control device (8) for converting a DC voltage generated by the at least one storage element (7) to an AC voltage to be applied to the electrode (4) is arranged in the handle part (3), **characterized in that** the electrical control device (8) is provided to modulate the voltage to be applied to the electrode (4) by changing the frequency of the AC voltage.

2. Apparatus according to Claim 1, **characterized in that** the electrical control device (8) is provided to regulate the voltage applied to the electrode (4).

3. Apparatus according to Claim 1 or 2, **characterized in that** the electrical control device (8) is provided to monitor and to limit the current intensity fed to the electrode (4).

4. Apparatus according to one of Claims 1 to 3, **characterized in that** the electrical control device (8) is provided to carry out short-circuit monitoring.

5. Apparatus according to one of Claims 1 to 4, **characterized in that** the handle part (3) has a socket (11) for connection of an electrical line for establishing an earth connection to the object (2).

6. Apparatus according to one of Claims 1 to 5, **characterized in that** an insulated frame is fitted to the handle part (3), which frame can be used to establish an earth connection to the object (2).

7. Apparatus according to one of Claims 1 to 6, **characterized in that** the at least one storage element (7) for storing electrical energy is a lithium-ion battery.

8. Apparatus according to one of Claims 1 to 7, **characterized in that** the handle part (3) has on the outer side thereof at least one contact (13) for connection of the at least one electrical storage element (7) to a charging device.

## Revendications

1. Dispositif de marquage électrochimique de surfaces de dispositifs électriquement conducteurs, avec un élément de tenue (3), avec une source de courant électrique (7) et avec une électrode (4) rattachée à l'élément de tenue (3) et couplée à la source de courant électrique (7), dans lequel la source de courant électrique (7) est agencée pour constituer au moins un élément de stockage logé dans l'élément de tenue (3), pour le stockage de l'énergie électrique et que ledit élément de tenue (3) contient un dispositif de contrôle électrique (8) pour transformer ladite tension continue générée par ledit au moins un élément de stockage (7) en une tension alternative appliquée à l'électrode (4), **caractérisé en ce que**,
ledit dispositif de contrôle électrique (8) est agencé pour moduler la tension à appliquer à l'électrode (4) en modifiant la fréquence de la tension alternative.

2. Dispositif selon la revendication 1,
**caractérisé en ce que**,
ledit dispositif de contrôle électrique (8) est agencé pour réguler la tension appliquée à l'électrode (4).

3. Dispositif selon la revendication 1 ou 2,
**caractérisé en ce que**,
ledit dispositif de contrôle électrique (8) est agencé pour surveiller et limiter le courant fourni à l'électrode (4).

4. Dispositif selon l'une des revendications 1 à 3,
**caractérisé en ce que**,
ledit dispositif de contrôle électrique (8) est agencé pour effectuer une opération de court-circuit.

5. Dispositif selon l'une des revendications 1 à 4,
**caractérisé en ce que**,
l'élément de tenue (3) comporte une douille (11) pour connecter une ligne électrique afin d'établir une connexion de mise à la terre avec l'objet (2).

6. Dispositif selon l'une des revendications 1 à 5,
**caractérisé en ce que**,
un cadre isolant est fixé sur l'élément de tenue (3), avec lequel une connexion de mise à la terre est établie avec l'objet (2).

7. Dispositif selon l'une des revendications 1 à 6,
**caractérisé en ce que**,
ledit au moins un élément de stockage (7) pour le stockage de l'énergie électrique est une batterie aux ions de Lithium.

8. Dispositif selon l'une des revendications 1 à 7,
**caractérisé en ce que**,
l'élément de tenue (3) comporte sur son côté extérieur, au moins un contact (13) pour coupler ledit au moins un élément de stockage (7) avec un chargeur.
